# FASCICULE DE BREVET EUROPEEN

(11) **EP 0 752 534 B1**
(45) Date de publication et mention de la délivrance du brevet: **20.11.2002**
(21) Numéro de dépôt: 96401467.4
(22) Date de dépôt: 03.07.1996
(51) Int. Cl.: F04D 19/00

(54) **Motoventilateur de refroidissement**
Motorgebläse für Kühlung
Motor fan for cooling

(30) Priorité: 05.07.1995 FR 9508117
(43) Date de publication de la demande: 08.01.1997
(73) Titulaire: GEC ALSTHOM TRANSPORT SA, 75016 Paris (FR)
(72) Inventeur: Berçot, Jacques, 25660 Merey sous Montrond (FR); Mary, Bernard, 25290 Ornans (FR)
(74) Mandataire: Gosse, Michel

(56) Documents cités:
- US-A- 2 191 341
- US-A- 2 488 945
- US-A- 2 596 781
- US-A- 2 956 731
- US-A- 3 089 637

## Description

La présente invention concerne les machines motrices, en général, et porte, plus particulièrement, sur un motoventilateur de refroidissement.

Il est connu de fixer les moteurs de ventilateur à l'intérieur d'une virole par l'intermédiaire de plaques de liaison ou d'une virole intérieure.

Il est également connu des documents US-A-2 956 731 et US-A-3 089 637 des motoventilateurs comportant des moyens redresseurs d'air formant un ensemble monobloc avec le carter de protection du moteur et une virole.

Il est connu du document US-A-2 596 781 un motoventilateur comportant des moyens redresseurs d'air qui sont soudés entre une virole et le carter de protection du moteur.

Un inconvénient des motoventilateurs de l'art antérieur est leur encombrement important pour des performances débit-pression données.

Un autre inconvénient des motoventilateurs de l'art antérieur est leur poids élevé et leur manque de rigidité mécanique.

Aussi un but de l'invention est-il la réalisation d'un motoventilateur de refroidissement d'encombrement limité par rapport à ces performances débit-pression, de masse réduite et générateur d'une pression acoustique plus faible.

Conformément à l'invention, le motoventilateur de refroidissement comporte un moteur et une hélice de ventilateur disposés coaxialement à l'intérieur d'une virole et des moyens redresseur d'air rapportés qui sont fixés directement sur la tôlerie magnétique du stator du moteur et fixés à la virole.

Le motoventilateur de refroidissement de l'invention satisfait également au moins l'une des caractéristiques suivantes:
- les moyens redresseur d'air sont obtenus par un procédé de mécano-soudage,
- les moyens redresseur d'air sont des aubages redresseurs,
- la virole se compose d'une première demi virole sur laquelle sont rapportés les moyens redresseur d'air et d'une seconde demi virole de ventilateur,
- les viroles sont obtenues par un procédé de mécano-soudage.

Les avantages du motoventilateur de refroidissement de l'invention sont l'amélioration du rendement du ventilateur, du refroidissement du moteur et de la rigidité mécanique de l'ensemble.

Un autre avantage du motoventilateur de refroidissement de l'invention est la réduction du niveau de bruit.

En effet, en se plaçant au point optimal de la courbe débit/pression, le motoventilateur de refroidissement de l'invention permet une diminution du niveau de bruit jusqu'à 10 dB.

De plus, le motoventilateur de refroidissement de l'invention permet d'obtenir, par exemple, des machines ayant un poids de l'ordre de 135kg, à comparer avec les machines de l'art antérieur qui ont un poids de l'ordre de 300kg.

D'autres buts, caractéristiques et avantages de l'invention apparaîtront à la lecture de la description du mode de réalisation préféré du motoventilateur de refroidissement, description faite en liaison avec les dessins dans lesquels:
- la figure 1 est une vue de profil d'un motoventilateur de refroidissement selon l'art antérieur,
- la figure 2 est une vue de face du motoventilateur de refroidissement de la figure 1,
- la figure 3 est une vue de profil du mode de réalisation préféré du motoventilateur de refroidissement conforme à l'invention,
- la figure 4 est une vue de face du motoventilateur de refroidissement de la figure 3,

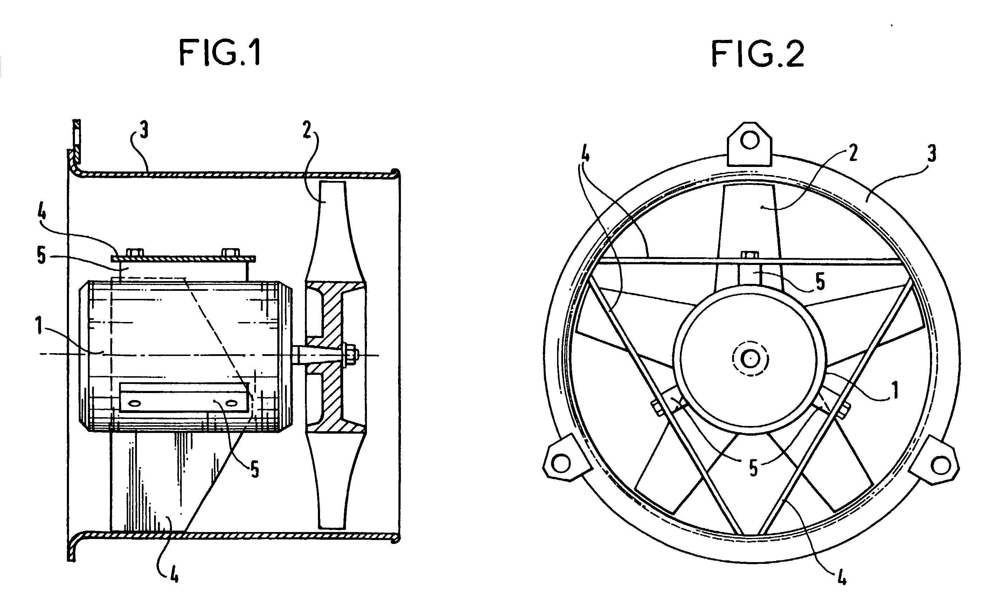

Les figures 1 et 2 sont, respectivement, une vue de profil et une vue de face d'un motoventilateur de refroidissement selon l'art antérieur.

Le motoventilateur de refroidissement de l'art antérieur est constitué d'un moteur 1 et d'une d'hélice 2 de ventilateur.

Le moteur 1 est fixé à l'intérieur d'une virole 3.

La virole 3 est une virole annulaire profilé périphérique destinée à être ajustée aux têtes de pales d'hélice de ventilateur.

La virole 3 a pour fonction de canaliser l'air mis en mouvement par les pales de ventilateur.

L'hélice 2 de ventilateur est rendue solidaire en rotation du rotor du moteur 1. Le moteur 1 et l'hélice 2 de ventilateur sont montés coaxialement dans la virole 3 de manière à ce que l'hélice de ventilateur puisse tourner à l'intérieur de la virole 3.

Le moteur 1 est fixé à l'intérieur de la virole 3 par l'intermédiaire de plaques de liaison 4 boulonnées sur des barreaux raidisseurs 5.

Les barreaux raidisseurs 5 sont au nombre de trois et sont fixés autour du stator du moteur 1 du motoventilateur de refroidissement.

Les barreaux raidisseur 5 sont soudés sur le paquet de tôles magnétiques qui constituent le stator du moteur 1.

Les barreaux raidisseur 5 sont disposés à 120° les uns des autres.

Les plaques de liaison sont de plus fixées, par soudage ou boulonnage, à la paroi intérieure de la virole 3.

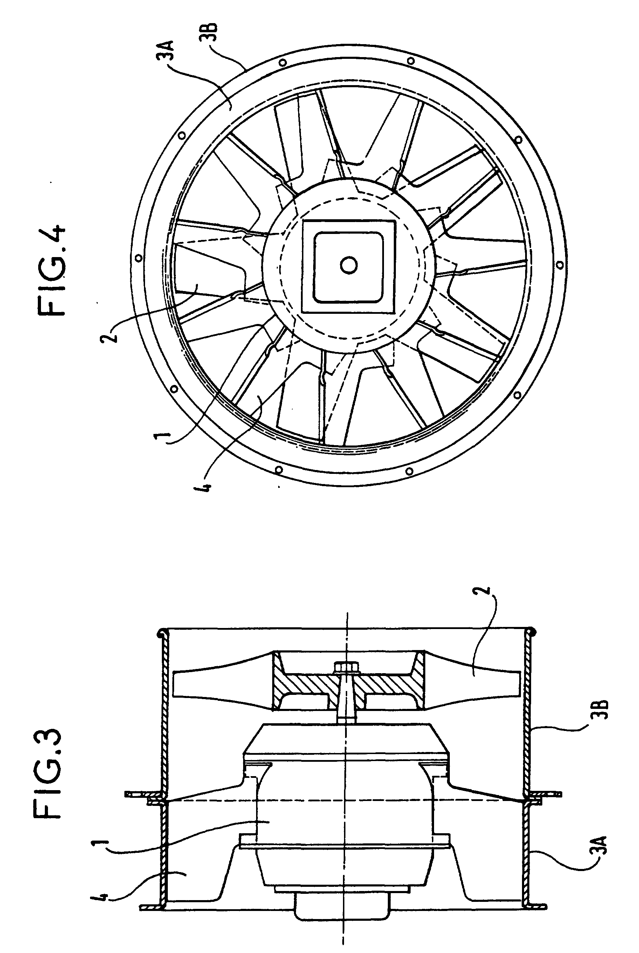

Les figures 3 et 4 sont, respectivement, une vue de profil et une vue de face du mode de réalisation préféré du motoventilateur de refroidissement selon l'invention.

Le motoventilateur de refroidissement selon l'invention comporte un moteur 1 et une hélice 2 de ventilateur disposés coaxialement à l'intérieur d'une virole 3.

Conformément à une caractéristique essentielle de l'invention, des moyens redresseur d'air rapportés 4 sont fixés partiellement ou totalement, par exemple par soudage, directement sur la tôlerie magnétique du stator du moteur 1 et sont fixés à la virole 3, de préférence à la paroi interne de la virole 3.

A titre d'exemple, les moyens redresseur d'air 4 sont obtenus par un procédé de mécano-soudage. Il est clair que tout autre procédé de fabrication peut être utilisé.

La virole 3 est de préférence un élément monobloc mais peut également se composer d'une première demi virole 3A maintenant les moyens redresseur d'air 4 et d'une seconde demi virole 3B de ventilateur.

A titre d'exemple, les viroles 3, 3A, 3B sont obtenues par un procédé de mécano-soudage.

Les moyens redresseur d'air 4 sont de préférence des aubages redresseurs.

L'orientation et le nombre des aubages redresseurs d'air sont déterminés de manière à optimiser le rendement aéraulique du ventilateur en canalisant la veine d'air produite par le motoventilateur.

Comme indiqué précédemment, le motoventilateur de l'invention permet d'augmenter le rendement du ventilateur axial et de diminuer le bruit émis.

Toutefois un avantage fondamental du motoventilateur de l'invention est d'améliorer le refroidissement du moteur, du fait que les moyens redresseur d'air, qui ont une fonction d'assemblage de la carcasse du moteur et de maintien du moteur dans la virole, se comporte également comme des ailettes de refroidissement de radiateur.

Il découle de ce qui précède une réduction de l'encombrement du motoventilateur de l'invention pour des performances débit-pression demandées.

## Revendications

1. Motoventilateur de refroidissement comportant un moteur (1) et une hélice (2) de ventilateur disposés coaxialement à l'intérieur d'une virole (3) et des moyens redresseurs d'air rapportés (4) et fixés au dit moteur (1) et à ladite virole (3), **caractérisé en ce que** lesdits moyens redresseurs d'air (4) sont fixés directement sur la tôlerie magnétique du stator du dit moteur (1).

2. Motoventilateur selon la revendication 1, dans lequel lesdits moyens redresseur d'air (4) sont obtenus par un procédé de mécano-soudage.

3. Motoventilateur selon l'une quelconque des revendications 1 à 2, dans lequel lesdits moyens redresseur d'air (4) sont des aubages redresseurs.

4. Motoventilateur selon l'une quelconque des revendications 1 à 3, dans lequel ladite virole (3) se compose d'une première demi-virole (3A) maintenant lesdits moyen redresseur d'air (4) et d'une seconde demi-virole (3B) de ventilateur (2).

5. Motoventilateur selon la revendication 1 ou 4, dans lequel ladite virole (3), ou ledites demi-viroles, sont obtenues par un procédé de mécano-soudage.

## Patentansprüche

1. Kühlmotorgebläse, das einen Motor (1) und ein Gebläserad (2), die in einem Mantel (3) koaxial angeordnet sind, sowie Luftleitmittel (4), die an den Motor (1) und an den Mantel (3) angefügt und daran befestigt sind, umfasst, **dadurch gekennzeichnet, dass** die Luftleitmittel (4) direkt an den Stator-Magnetblechen des Motors (1) befestigt sind.

2. Motorgebläse nach Anspruch 1, bei dem die Luftleitmittel (4) durch ein Verfahren des mechanischen Schweißens erhalten werden.

3. Motorgebläse nach einem der Ansprüche 1 bis 2, bei dem die Luftleitmittel (4) Leitschaufeln sind.

4. Motorgebläse nach einem der Ansprüche 1 bis 3, bei dem der Mantel (3) aus einem ersten Halbmantel (3A), der die Luftleitmittel (4) hält, und aus einem zweiten Halbmantel (3B) des Gebläses (2) aufgebaut ist.

5. Motorgebläse nach Anspruch 1 oder 4, bei dem der Mantel (3) oder die Halbmäntel durch ein Verfahren des mechanischen Schweißens erhalten werden.

## Claims

1. A motor-driven cooling ventilator comprising a motor (1) and a ventilator fan (2) disposed on the same axis inside a casing (3), and separate air guide means (4) fixed to said motor (1) and to said casing (3), the ventilator being **characterized in that** said air guide means (4) are fixed directly to the magnetic laminations of the stator of said motor (1).

2. A motor-driven ventilator according to claim 1, in which said air guide means (4) are obtained by a welding method.

3. A motor-driven ventilator according to claim 1 or claim 2, in which said air guide means (4) are guide vanes.

4. A motor-driven ventilator according to any one of claims 1 to 3, in which said casing (3) is made up of a first half-casing (3A) holding said air guide means (4) and by a second half-casing (3B) for the ventilator (2).

5. A motor-driven ventilator according to claim 1 or 4, in which said casings (3) or said half-casings are obtained by a welding method.
